# EUROPÄISCHE PATENTSCHRIFT

(11) **EP 0 523 573 B1**
(45) Veröffentlichungstag und Bekanntmachung des Hinweises auf die Patenterteilung: **29.11.1995**
(21) Anmeldenummer: 92111836.0
(22) Anmeldetag: 11.07.1992
(51) Int. Cl.: B23B 5/18, B23B 33/00

(54) **Verfahren zur spanenden Bearbeitung von Werkstücken mit rotationssymmetrischen Flächen, vorzugsweise von Kurbelwellen, und Vorrichtung zur Durchführung eines solchen Verfahrens**
Method for cutting workpieces with rotation symmetric planes, specially crankshafts, and device for using this method
Méthode d'usinages des pièces ayant des surfaces à symétrie de rotation tels que des vilbrequins, et dispositif d'utilisation de cette méthode

(30) Priorität: 18.07.1991 DE 4123859
(43) Veröffentlichungstag der Anmeldung: 20.01.1993
(73) Patentinhaber: Gebr. Heller Maschinenfabrik GmbH, D-72622 Nürtingen (DE)
(72) Erfinder:
(74) Vertreter: Jackisch-Kohl, Anna-Katharina

(56) Entgegenhaltungen:
- EP-A- 0 184 065
- DE-A- 3 427 533
- DE-A- 3 809 619
- US-A- 3 904 214

## Beschreibung

Die Erfindung betrifft ein Verfahren zur spanenden Bearbeitung von Werkstücken mit rotationssymmetrischen Flächen, vorzugsweise von Kurbelwellen, nach dem Oberbegriff des Anspruches 1 sowie eine Vorrichtung zur Durchführung eines solchen Verfahrens nach dem Oberbegriff des Anspruches 5.

Bei diesem bekannten Verfahren (DE-OS 38 09 619) wird das Werkstück an beiden Enden zeitlich nacheinander bearbeitet. Um das eine, unbearbeitete Werkstückende am Umfang bearbeiten zu können, wird es lediglich mit einer Zentrierspitze gehalten, während das gegenüberliegende Werkstückende, das am Umfang ebenfalls unbearbeitet ist, mittels der Backen eines Backenfutters gespannt wird, die unabhängig voneinander radial bewegt werden können. Dieses Backenfutter bildet ein radiales Spannmittel mit ausgleichend spannenden Spannelementen. Das gegenüberliegende Spannmittel hat radial zentrierend spannende Spannelemente, die zunächst axial zurückgezogen sind. Dadurch kann das benachbarte Werkstückende am Umfang mit dem entsprechenden Werkzeug bearbeitet werden.

Anschließend wird das gegenüberliegende Werkstückende bearbeitet. Hierzu wird das umfangsseitig zuvor bearbeitete Werkstückende mittels der radial zentrierenden Spannmittel und der Zentrierspitze festgehalten, während nunmehr das andere, noch zu bearbeitende Werkstückende lediglich durch eine Zentrierspitze gehalten wird. Die ausgleichend spannenden Spannelemente sind axial zurückgezogen. Ist auch dieses Werkstückende am Umfang bearbeitet, wird das Werkstück an beiden Enden mittels der Spannmittel sowie der Zentrierspitzen festgehalten. Diese Spannung zwischen den Spitzen bleibt auch während der Mittenbearbeitung des Werkstückes aufrechterhalten. Da bei dieser Mittenbearbeitung an den zuvor bearbeiteten Werkstückenden sowohl die Spannmittel als auch die Zentrierspitzen am Werkstück angreifen, liegt an beiden Werkstückenden eine Überbestimmung vor. Fallen die Achsen der Spitzen sowie der zentrierend spannenden Spannelemente nicht exakt zusammen, dann treten Verzwängungen auf, die zu Lasten der Zentrierspitzen gehen. Dadurch treten sehr starke Belastungen der Vorrichtung und des Werkstückes auf. Die Vorrichtung unterliegt einem starken Verschleiß, während die Werkstückenden aufgrund dieser Belastungen zu große Rundlauftoleranzen aufweisen.

Ausgleichend spannende Spannelemente, die ausgleichend zum Werkstückzentrum spannen, stellen einen Kompromiß dar, da die Rundlaufgenauigkeiten am Spanndurchmesser verhältnismäßig gering sind.

Der Erfindung liegt die Aufgabe zugrunde, das gattungsgemäße Verfahren und die gattungsgemäße Vorrichtung so auszubilden, daß bei der Komplettbearbeitung des Werkstückes in einer einzigen Aufspannung unzulässig hohe Belastungen der Vorrichtung und des Werkstückes vermieden werden, ohne daß sich dies nachteilig auf eine hohe Bearbeitungsgenauigkeit (Rundlaufgenauigkeit) auswirkt.

Diese Aufgabe wird beim gattungsgemäßen Verfahren erfindungsgemäß mit den kennzeichnenden Merkmalen des Anspruches 1 und bei der gattungsgemäßen Vorrichtung erfindungsgemäß mit den kennzeichnenden Merkmalen des Anspruches 5 gelöst.

Bei diesem Verfahren wird zunächst im ersten Bearbeitungsschritt das eine unbearbeitete Werkstückende mit den ausgleichend spannenden Spannelementen gehalten und das andere Werkstückende bearbeitet. Im nächsten Bearbeitungsschritt wird nun dieses bearbeitete Werkstückende zentrierend gespannt und die zugehörige Spitze axial zurückgezogen, während die ausgleichend spannenden Spannelemente am gegenüberliegenden, unbearbeiteten Werkstückende axial zurückgefahren werden. Nunmehr wird dieses Werkstückende bearbeitet, wobei durch die zentrierend spannenden Spannelemente am gegenüberliegenden Werkstückende sichergestellt ist, daß das Werkstückende exakt auf den erforderlichen Durchmesser bearbeitet wird. Da die Zentrierspitze im Bereich der zentrierend spannenden Spannelemente vom Werkstück zurückgezogen ist, können keine Verzwängungen zwischen dieser Zentrierspitze und den Spannelementen auftreten. Das Werkstück und die Vorrichtung werden dadurch nicht unzulässig hoch belastet. Für die Bearbeitung des Mittelbereiches des Werkstückes werden beide Werkstückenden zentrierend gespannt und beide Zentrierspitzen axial zurückgefahren. Dadurch läßt sich eine äußerst hohe Rundlaufgenauigkeit des Werkstückes herstellen, da die Zentrierspitzen und das Werkstück nicht mehr hoch belastet werden können.

Bei der Vorrichtung ist das eine Spannfutter sowohl mit den zentrisch spannenden als auch mit den ausgleichend spannenden Spannelementen versehen, die unabhängig radial voneinander verstellt werden können. Dadurch ist es möglich, mit ein und dem selben Spannfutter zunächst das Werkstückende ausgleichend und später zentrierend zu spannen, indem die Jeweiligen Spannelemente zum Einsatz gebracht werden. Mit der erfindungsgemäßen Vorrichtung ist es dadurch möglich, die Werkstücke mit hoher Genauigkeit und ohne unzulässig hohe Belastung des Werkstückes zu bearbeiten.

Weitere Merkmale von Ausführungsbeispielen der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: in schematischer Darstellung verschiedene Arbeitsschritte bei der Bearbeitung einer Kurbelwelle,
- Fig. 2: in einer Darstellung entsprechend Figur 1 verschiedene Verfahrensschritte bei der Bearbeitung einer Kurbelwelle nach einer zweiten Ausführungsform.

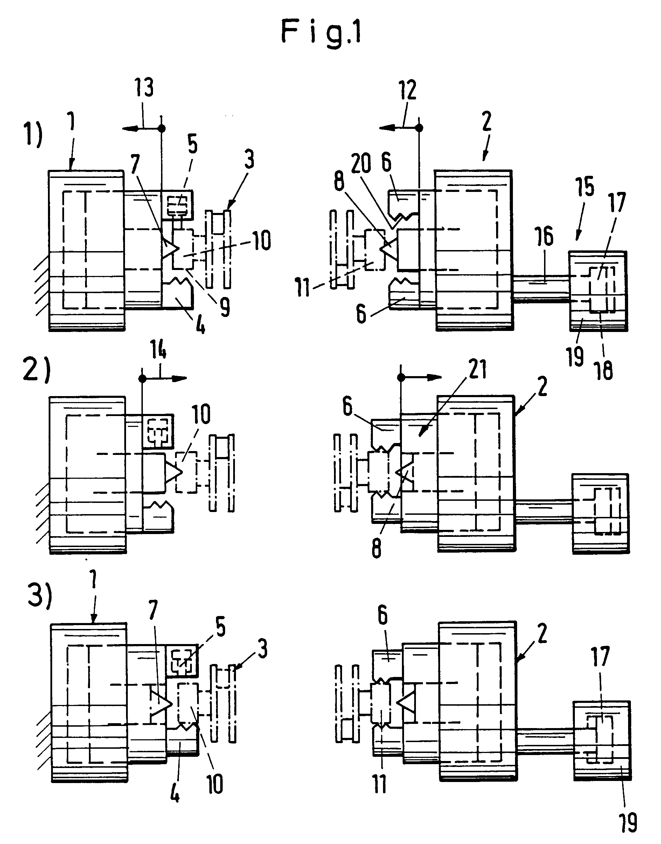

In Figur 1 sind schematisch zwei Spannfutter 1, 2 einer (nicht dargestellten) Bearbeitungsmaschine dargestellt, mit denen eine zu bearbeitende Kurbelwelle 3 oder ein anderes Werkstück mit rotationssymmetrischen Flächen während eines Teils der Bearbeitung gespannt wird.

Das Spannfutter 1 hat drei zentrierende Backen, von denen in Figur 1 nur eine Backe 4 dargestellt ist. Diese zentrierenden Spannbacken 4 sind über den Umfang des Spannfutters in gleichen Winkelabständen angeordnet. Außerdem hat das Spannfutter 1 drei ausgleichend spannende Backen 5, von denen in Figur 1 wiederum nur eine Spannbacke 5 dargestellt ist. Auch diese ausgleichend spannenden Backen 5 sind über den Umfang des Spannfutters 1 in gleichen Winkelabständen angeordnet. Das Spannfutter 1 kann auch mehr als drei der zentrierend und der ausgleichend spannenden Spannbacken 4 und 5 aufweisen. Die Spannbacken 4 und 5 sind über den Umfang des Spannfutters abwechselnd angeordnet.

Das gegenüberliegende Spannfutter 2 hat ausschließlich zentrierend spannende Spannbacken 6.

Sowohl die Spannbacken 4, 5 des Spannfutters 1 als auch die Spannbacken 6 des Spannfutters 2 können axial ausgefahren und zurückgezogen werden.

Mit der Bearbeitungsmaschine mit den beiden Spannfuttern 1, 2, die an einem (nicht dargestellten) Spindelstock vorgesehen sind, können an der Kurbelwelle 3 beide Enden und alle Hauptlager und Wangenseitenflächen sowie gegebenenfalls alle Wangen-Außendurchmesser in einer Aufspannung bearbeitet werden.

In Figur 1 sind mit 1 bis 3 die verschiedenen Stellungen der Spannfutter 1, 2 bzw. ihrer Spannbacken bei der Kurbelwellenbearbeitung dargestellt. Die Kurbelwelle 3 wird zunächst zwischen Spitzen 7 und 8 zentrierend gespannt. Die Spannbacken 6 des Spannfutters 2 sind zurückgezogen, während sich die drei Spannbacken 5 unabhängig ausgleichend voneinander am unbearbeiteten Außendurchmesser 9 des einen Kurbelwellenendes 10 anlegen. Das gegenüberliegende Kurbelwellenende 11 liegt frei, weil die Spannbacken 6 axial zurückgezogen sind. Somit kann in der Stellung 1 der Figur 1 das rechte Kurbelwellenende 11 bearbeitet, im Ausführungsbeispiel gedreht werden.

Nach Beendigung dieses Bearbeitungsschrittes werden die Spannbacken 6 des Spannfutters 2 axial in Pfeilrichtung 12 vorgefahren und die Kurbelwelle 3 am bearbeiteten rechten Kurbelwellenende 11 gespannt (Stellung 2). Anschließend wird die Zentrierspitze 8 axial zurückgefahren, so daß sie nicht mehr an der Stirnseite der Kurbelwelle 3 anliegt. Am gegenüberliegenden Spannfutter 1 werden die Spannbacken 5 vom Kurbelwellenende 10 radial und anschließend axial in Pfeilrichtung 13 zurückgefahren. Das unbearbeitete Kurbelwellenende 10 liegt somit frei (Stellung 2 in Figur 1), so daß es mit entsprechenden Werkzeugen bearbeitet, im Ausführungsbeispiel gedreht werden kann. Während dieses Bearbeitungsschrittes ist somit die Kurbelwelle 3 zwischen der Zentrierspitze 7 und den zentrierenden Spannbacken 6 des Spannfutters 2 gespannt und rotiert während der Bearbeitung in bekannter Weise mit Schnittgeschwindigkeit. Auch beim Bearbeitungsschritt 1 rotiert die Kurbelwelle 3 während der Bearbeitung des Kurbelwellenendes 11 mit Schnittgeschwindigkeit.

Sobald das Kurbelwellenende 10 bearbeitet ist, werden die Spannbacken 4, 5 des Spannfutters 1 axial in Pfeilrichtung 14 vorgefahren und nunmehr die zentrierend spannenden Backen 4 radial verstellt. Dadurch wird die Kurbelwelle 3 am bearbeiteten Ende 10 mit den Spannbacken 4 des Spannfutters 1 zentrierend gespannt. Die anderen Spannbacken 5 des Spannfutters 1 bleiben radial zurückgezogen. Am gegenüberliegenden Spannfutter 2 bleiben die zentrierenden Spannbacken 6 in ihrer Spannstellung. In der Stellung 3 ist somit die Kurbelwelle 3 zentrierend mit den Spannbacken 4 und 6 der Spannfutter 1 und 2 an ihren beiden Enden 10 und 11 gespannt. Die Zentrierspitze 7 wird axial zurückgezogen.

In der Stellung 3 der Figur 1 kann nun der Mittelbereich der Kurbelwelle 3 zwischen den beiden Enden 10 und 11 in bekannter Weise bearbeitet werden.

Da die Kurbelwelle an ihren bearbeiteten Enden 10 und 11 während der Mittelbearbeitung zentrierend mit den Spannbacken 4 und 6 gespannt wird, lassen sich sehr hohe Rundlaufgenauigkeiten erzielen, die im Bereich unter 1/100 mm liegen.

Im beschriebenen und dargestellten Ausführungsbeispiel werden die Spannbacken 4 bis 6 axial verstellt. Es ist auch möglich, das gesamte Spannfutter 1, 2 oder den zugehörigen Spindelstock axial zu verstellen. Die Zentrierspitzen 7 und 8 werden jeweils axial in bezug auf die Spannbacken 4 bis 6 bzw. das Spannfutter axial und unabhängig von ihnen verstellt.

Um die Rundlaufgenauigkeit der bearbeiteten Kurbelwelle 3 zu erhöhen, ist die Bearbeitungsmaschine mit einer Entlastungseinrichtung 15 versehen, die in der Stellung 3 der Figur 1 dafür sorgt, daß eine in der Kurbelwelle 3 vorhandende Biegelinie eliminiert wird. Die Entlastungseinrichtung 15 hat eine mit dem Spannfutter 2 verbundende Kolbenstange 16, deren freies Ende einen Kolben 17 trägt, der in einem Zylinderraum 18 eines Zylinders 19 verschiebbar ist. In den Stellungen 1 und 2 befindet sich der Kolben 17 in seiner in Figur 1 linken Endstellung. Beim Spannen der Kurbelwelle 3 mittels der Spannbacken 4 bis 6 üben die Spannbacken konstruktionsbedingt eine axial gerichtete Schubkraft auf die Kurbelwelle aus. Diese Schubkraft rührt daher, daß die über die Spannflächen 20 der Spannbacken 6 ausgeübte Radialkraft während des Spannvorganges mit Abstand von ihnen in die Spannbacken 6 eingeleitet wird (Pfeil 21 in Stellung 2 der Figur 1). Aufgrund des Hebelarmes zwischen der jeweiligen Spannfläche 20 und der Krafteinleitung 21 werden die Spannbacken 6 nicht nur radial an das Kurbelwellenende 11 angelegt, sondern belasten die Kurbelwelle 3 auch in Axialrichtung in Richtung auf das gegenüberliegende Spannfutter 1. Diese Schubkraft führt zu einer Ausbiegung der Kurbelwelle, die durch die Entlastungeinrichtung 15 wieder aufgehoben wird. Sobald die Kurbelwellenenden 10, 11 in der beschriebenen Weise mittels der Spannbacken 4 und 6 zentrierend gespannt und die Spitze 7 axial zurückgefahren ist, wird das Spannfutter 2 oder der zugehörige Spindelstock durch entsprechende Druckbeaufschlagung des Kolbens 17 so weit in Figur 1 nach rechts verstellt, bis die Biegung der Kurbelwelle 3 aufgehoben ist. Der Kolben 17 bewegt sich hierbei im Zylinder 19 nach rechts. Die Biegung der Kurbelwelle 3 und der dadurch hervorgerufene Schlag beim Drehen der Kurbelwelle 3 läßt sich sehr einfach während einer Rotation der Kurbelwelle feststellen. Aus dem gemessenen Schlag läßt sich einfach ermitteln, wie weit der Kolben 17 und damit das Spannfutter 2 bzw. der Spindelstock axial zurückgefahren werden müssen, um diese Biegung wieder zu eliminieren. Vorteilhaft wird mit der Entlastungseinrichtung 15 die Kurbelwelle 3 axial zugbelastet, wodurch sich eine höhere Festigkeit der Kurbelwelle 3 ergibt, die zu einer noch besseren Rundlaufgenauigkeit nach der Bearbeitung führt.

Infolge der beschriebenen zentrierenden Spannung der Kurbelwelle 3 ausschließlich mit den Spannbacken 4 und 6 an den bearbeiteten Kurbelwellen 10, 11 und des Entspannens der Kurbelwelle 3 durch Zurückziehen des Spannfutters 2 bzw. des Spindelstockes kann mit dem beschriebenen Verfahren eine äußerst hohe Rundlaufgenauigkeit der Kurbelwelle erreicht werden.

Am Spannfutter 1 werden die Spannbacken 4 und 5 unabhängig voneinander betätigt, so daß wahlweise die ausgleichend spannenden Spannbacken 5 oder die zentrierend spannenden Spannbacken 4 das Kurbelwellenende 10 erfassen.

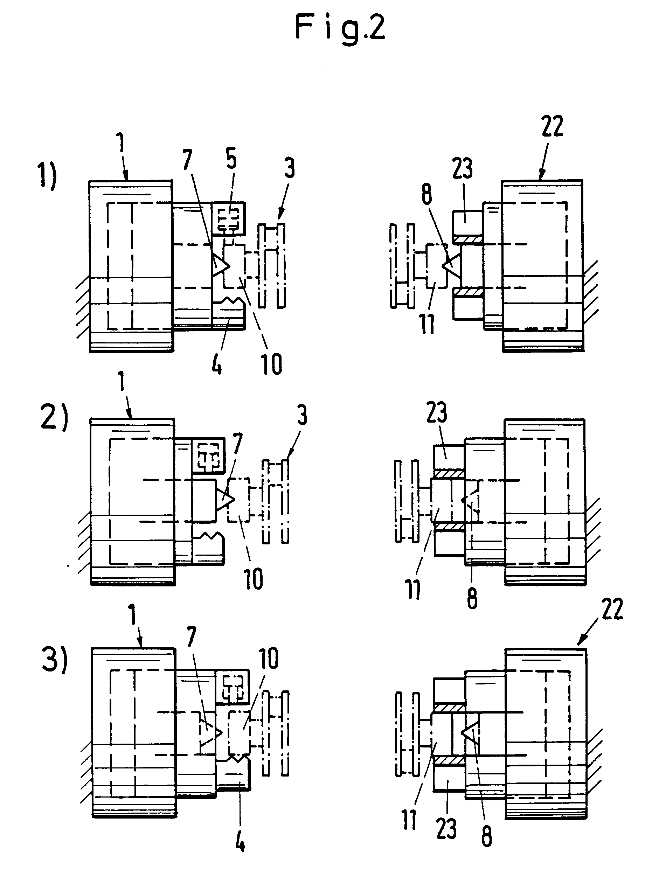

Bei der Ausführungsform gemäß Figur 2 ist die Entlastungseinrichtung 15 nicht notwendig, weil als Spanneinrichtung nicht ein Backenfutter, sondern ein Spannzangenfutter 22 anstelle des Spannfutters 2 eingesetzt wird. Es hat Spannzangen 23, mit denen das Kurbelwellenende 11 zentrierend gespannt wird. Im Unterschied zu einem Backenfutter hat das Spannzangenfutter den Vorteil, daß es beim Spannen keine axialen Kräfte erzeugt, sondern ausschließlich radial wirkende Kräfte. Dadurch wird die Kurbelwelle 3 durch das Spannzangenfutter 22 nicht axial belastet und biegt demnach auch nicht aus.

Mit diesem Ausführungsbeispiel wird die Kurbelwelle 3 in gleicher Weise wie beim Ausführungsbeispiel nach Figur 1 bearbeitet. In der Stellung 1 ist die zu bearbeitende Kurbelwelle 3 zunächst zwischen den Spitzen 7 und 8 zentrierend gespannt. Die ausgleichend spannenden Spannbacken 5 des Spannfutters 1 legen sich unabhängig ausgleichend voneinander an der unbearbeiteten Mantelfläche des Kurbelwellenendes 10 an, während die zentrierend spannenden Spannbacken 4 Abstand vom Kurbelwellenende 10 haben. Auf der gegenüberliegenden Seite sind die Spannzangen 23 axial zurückgezogen, so daß die Mantelfläche des Kurbelwellenendes 11 für die Bearbeitung durch entsprechende Werkzeuge frei liegt. Dieses Kurbelwellenende 11 wird vorteilhaft gedreht. Hierbei rotiert die Kurbelwelle 3 in bekannter Weise um ihre jeweilige Achse mit Schnittgewindigkeit.

Anschließend werden die Spannzangen 23 des Spannzangenfutters 22 axial vorgefahren und das bearbeitete Kurbelwellenende 11 zentrierend gespannt. Die Spitze 8 wird axial zurückgezogen. Die Spannbacken 5 des gegenüberliegenden Spannfutters 1 werden wie beim vorigen Ausführungsbeispiel radial vom Kurbelwellenende 10 abgehoben und axial zurückgefahren, so daß das Kurbelwellenende 10 frei liegt und mit den entsprechenden Bearbeitungswerkzeugen, vorzugsweise Drehwerkzeugen, bearbeitet werden kann. Während diese Bearbeitungsvorganges (Stellung 2 in Figur 2) wird die Kurbelwelle 3 somit an einem Ende mit den zentrierenden Spannzangen 23 und am gegenüberliegenden Ende lediglich mit der Spitze 7 gehalten.

Ist das Kurbelwellenende 10 bearbeitet, werden die Spannbacken des Spannfutters 1 wieder axial ausgefahren und nunmehr die zentrierenden Spannbacken 4 zur Anlage an der Mantelfläche des bearbeiteten Kurbelwellenendes 10 gebracht. Am gegenüberliegenden Kurbelwellenende 11 bleiben die Spannzangen 23 in ihrer Spannstellung und die Spitze 8 in ihrer axial zurückgezogenen Lage (Stellung 3). Die Zentrierspitze 7 wird vorteilhaft axial zurückgezogen, so daß in dieser Stellung 3 die Kurbelwelle 3 an beiden Enden durch die zentrierenden Spannbacken 4 des Spannfutters 1 und die Spannzangen 23 des Spannzangenfutters 22 an ihren Enden 10, 11 zentrierend gespannt wird, während die Spitzen 7, 9 axial von der Kurbelwelle 3 zurückgezogen sind.

In der Stellung 3 der Spannzangen kann nunmehr der Mittelbereich der Kurbelwelle 3 bearbeitet werden, beispielsweise durch Drehräumen, aber auch durch einen Drehvorgang.

Da die Spannzangen 23 des Spannzangenfutters 22 keine Axialkräfte auf die Kurbelwelle 3 ausüben, wird sie im eingespannten Zustand durch die Spannzangen 23 auch nicht gebogen. Durch Verwendung des Spannzangenfutters 22 ergibt sich eine äußerst hohe Rundlaufgenauigkeit der Kurbelwelle 3, die noch besser ist als die Rundlaufgenauigkeit bei Einsatz des Spannbackenfutters 2 gemäß Figur 1.

## Patentansprüche

1. Verfahren zur spanenden Bearbeitung von Werkstücken (3) mit rotationssymmetrischen Flächen, vorzugsweise von Kurbelwellen, die an beiden, am Umfang unbearbeiteten Enden zwischen Spitzen (7, 8) gespannt werden, von denen mindestens eine axial zustellbar ist, wobei zur Bearbeitung der beiden Enden des Werkstückes (3) das jeweils gegenüberliegende Ende mit Spannmitteln (4, 6) radial gespannt wird, während am zu bearbeitenden Werkstückende die radialen Spannmittel axial zurückgezogen sind, von denen das eine radiale Spannmittel zentrierend und das andere radiale Spannmittel ausgleichend spannende Spannelemente hat, wobei nach der Endenbearbeitung der Mittelbereich des Werkstückes (3) bearbeitet wird, während beide radialen Spannmittel (4, 6) an den Werkstückenden angreifen,
dadurch gekennzeichnet, daß bei der Bearbeitung des noch unbearbeiteten zweiten Endes (10, 11) des Werkstückes (3) die Spitze (7, 8) am gegenüberliegenden, bereits bearbeiteten ersten Ende (11, 10) axial von diesem Werkstückende zurückgezogen ist, und daß bei der Bearbeitung des Mittelbereiches des Werkstückes (3) beide Spitzen (7, 8) axial vom Werkstück (3) zurückgezogen und beide bearbeiteten Enden (10, 11) des Werkstückes (3) mit den radialen Spannmitteln (4, 6) zentrierend gespannt sind.

2. Verfahren nach Anspruch 1,
dadurch gekennzeichnet, daß bei der Bearbeitung des einen Werkstückendes (11) das Werkstück (3) am gegenüberliegenden Ende (10) ausgleichend gespannt und während der Bearbeitung des Mittelbereiches an diesem Ende (10) zentrierend gespannt wird.

3. Verfahren nach Anspruch 1 oder 2,
dadurch gekennzeichnet, daß das Werkstück (3) nach der Endenbearbeitung und vor der Bearbeitung des Mittelbereiches zur Eliminierung vorhandener axialer Druckspannungen entspannt wird.

4. Verfahren nach Anspruch 3,
dadurch gekennzeichnet, daß auf das Werkstück (3) vor der Bearbeitung des Mittelbereiches eine axiale Zugspannung aufgebracht wird.

5. Vorrichtung zur Durchführung des Verfahrens nach einem der Ansprüche 1 bis 4,
mit zwei einander gegenüberliegenden Hauptspindeln und Spannfuttern (1, 2), die radial und axial verstellbare Spannelemente haben, und mit zwei einander gegenüberliegenden Zentrierspitzen (7, 8), die axial gegenüber den Spannelementen bzw. den Spannfuttern verstellbar sind,
dadurch gekennzeichnet, daß das eine Spannfutter (1) zentrierend spannende Spannelemente (4) und ausgleichend spannende Spannelemente (5) hat, die unabhängig voneinander radial verstellbar sind.

6. Vorrichtung nach Anspruch 5,
dadurch gekennzeichnet, daß die ausgleichend und die zentrierend spannenden Spannelemente (4, 5) abwechselnd angeordnet sind.

7. Vorrichtung nach Anspruch 5 oder 6,
dadurch gekennzeichnet, daß die zentrierend und die ausgleichend spannenden Spannelemente (4, 5) gemeinsam axial verstellbar sind.

8. Vorrichtung nach einem der Ansprüche 5 bis 7,
dadurch gekennzeichnet, daß das eine Spannfutter (2) bei in Spannstellung befindlichen Spannelementen (6) zum Entspannen des Werkstückes (3) axial verstellbar ist.

9. Vorrichtung nach Anspruch 8,
dadurch gekennzeichnet, daß das eine Spannfutter (2) mit einer Entlastungseinrichtung (15) versehen ist, die mit einer Kolben-Zylinder-Einheit (16, 17, 19) versehen ist.

10. Vorrichtung nach Anspruch 9,
dadurch gekennzeichnet, daß das eine Spannfutter (2) zur axialen Zugbelastung des eingespannten Werkstückes (3) durch Beaufschlagung des Kolbens (17) verstellbar ist.

11. Vorrichtung nach einem der Ansprüche 5 bis 10,
dadurch gekennzeichnet, daß das eine Spannfutter (2) ein Dreibackenspannfutter ist.

12. Vorrichtung nach einem der Ansprüche 5 bis 10,
dadurch gekennzeichnet, daß das eine Spannfutter (22) ein Spannzangenfutter ist.

## Claims

1. A method for cutting workpieces (3) with rotationally symmetrical surfaces, preferably crankshafts, which are gripped at both ends which are unmachined on the periphery between points (7, 8), at least one of which may be advanced axially, wherein in order to machine the two ends of the workpiece (3), the respectively opposite end is gripped radially by gripping means (4, 6), while at the workpiece end which is to be machined the radial gripping means are retracted axially, of which one radial gripping means has gripping elements which grip centreingly and the other radial gripping means has gripping elements which grip compensatively, wherein, after the machining of the ends, the middle region of the workpiece (3) is machined while both radial gripping means (4, 6) act on the workpiece ends, characterized in that when the still unmachined second end (10, 11) of the workpiece (3) is machined, the point (7, 8) at the opposite, already machined first end (10, 11) is retracted axially from this workpiece end, and in that when the middle region of the workpiece (3) is machined, both points (7, 8) are retracted axially from the workpiece (3) and both machined ends (10, 11) of the workpiece (3) are gripped centreingly by the radial gripping means (4, 6).

2. A method according to claim 1, characterized in that when one workpiece end (11) is machined, the workpiece (3) is gripped compensatively at the opposite end (10) and while the middle region is being machined, it is gripped centreingly at this end (10).

3. A method according to claim 1 or 2, characterized in that the workpiece (3) is relieved of stress after the ends have been machined and before the middle region is machined in order to eliminate any axial compressive stresses present.

4. A method according to claim 3, characterized in that an axial tensile stress is applied to the workpiece (3) before the middle region is machined.

5. A device for implementing the method according to one of claims 1 to 4, comprising two mutually opposite main spindles and gripping chucks (1, 2) which have radially and axially adjustable gripping elements, and two mutually opposite centreing points (7, 8) which are axially adjustable relative to the gripping elements or the gripping chucks, characterized in that one gripping chuck (1) has gripping elements (4) which grip centreingly and gripping elements (5) which grip compensatively which are radially adjustable independently of one another.

6. A device according to claim 5, characterized in that the gripping elements (4, 5) gripping centreingly and compensatively are arranged alternately.

7. A device according to claim 5 or 6, characterized in that the gripping elements (4, 5) gripping centreingly and compensatively are jointly adjustable axially.

8. A device according to one of claims 5 to 7, characterized in that one gripping chuck (2) is axially adjustable when the gripping elements (6) are in the gripping position in order to relieve the workpiece of stress (3).

9. A device according to claim 8, characterized in that one gripping chuck (2) is provided with a load-relieving device (15) which is provided with a piston-cylinder-unit (16, 17, 19).

10. A device according to claim 9, characterized in that one gripping chuck (2) is adjustable by the action of the piston (17) for the axial tensioning of the clamped workpiece (3).

11. A device according to one of claims 5 to 10, characterized in that one gripping chuck (2) is a three-jaw gripping chuck.

12. A device according to one of claims 5 to 10, characterized in that one gripping chuck (22) is a collet chuck.

## Revendications

1. Procédé pour l'usinage par enlèvement de matière de pièces (3) ayant des surfaces à symétrie de révolution, de préférence des vilebrequins, qui sont serrées aux deux extrémités non usinées sur la périphérie entre des pointes (7, 8), dont l'une au moins peut être déplacée axialement ; dans lequel pour l'usinage des deux extrémités de la pièce (3), l'extrémité située respectivement à l'opposé est serrée radialement au moyen d'organes de serrage (4, 6), tandis qu'à l'extrémité à usiner de la pièce les organes de serrage radiaux sont retirés axialement ; dans lequel un organe de serrage radial possède des éléments de serrage qui assurent un serrage avec centrage, et l'autre organe de serrage radial possède des éléments de serrage qui assurent un serrage avec compensation, et après l'usinage des extrémités, la région médiane de la pièce (3) est usinée, tandis que les deux organes de serrage radiaux (4, 6) attaquent aux extrémités de la pièce,
caractérisé en ce que lors de l'usinage de la seconde extrémité (10, 11) encore non usinée de la pièce (3), la pointe (7, 8) située à la première extrémité opposée (11, 10) déjà usinée, est retirée axialement par rapport à cette extrémité de la pièce, et en ce que lors de l'usinage de la région médiane de la pièce (3), les deux pointes (7, 8) sont retirées axialement par rapport à la pièce (3), et les deux extrémités usinées (10, 11) de la pièce (3) sont serrées avec centrage au moyen des organes de serrage radiaux (4, 6).

2. Procédé selon la revendication 1,
caractérisé en ce que lors de l'usinage de l'une ses extrémités (11), la pièce (3) est serrée avec compensation à l'extrémité (10) située à l'opposé, et en ce que pendant l'usinage de la région médiane, la pièce (3) est serrée avec centrage à cette extrémité (10).

3. Procédé selon l'une ou l'autre des revendications 1 et 2,
caractérisé en ce que la pièce (3) est desserrée après l'usinage des extrémités et avant l'usinage de la région médiane pour l'élimination de tensions de pression axiales présentes.

4. Procédé selon la revendication 3,
caractérisé en ce qu'une tension de traction axiale est appliquée sur la pièce (3) avant l'usinage de la région médiane.

5. Dispositif pour la mise en oeuvre du procédé selon l'une quelconque des revendications 1 à 4,
comportant deux broches principales situées à l'opposé l'une de l'autre, et des mandrins de serrage (1, 2), qui possèdent des éléments de serrage mobiles radialement et axialement, et comportant deux pointes de serrage (7, 8) situées à l'opposé l'une de l'autre, qui sont mobiles axialement par rapport aux éléments de serrage ou aux mandrins de serrage,
caractérisé en ce que l'un des mandrins de serrage (1) possède des éléments de serrage (4) avec centrage et des éléments de serrage (5) avec compensation, qui peuvent être déplacés radialement indépendamment les uns des autres.

6. Dispositif selon la revendication 5,
caractérisé en ce que les éléments de serrage (4, 5) avec compensation et avec centrage sont agencés alternativement.

7. Dispositif selon l'une ou l'autre des revendications 5 et 6,
caractérisé en ce que les éléments de serrage (4, 5) avec centrage et avec compensation peuvent être déplacés conjointement axialement.

8. Dispositif selon l'une quelconque des revendications 5 à 7,
caractérisé en ce que pour le desserrage de la pièce (3), l'un des mandrins de serrage (2) peut être déplacé axialement lorsque les éléments de serrage (6) se trouvent dans la position de serrage.

9. Dispositif selon la revendication 8,
caractérisé en ce que l'un des mandrins de serrage (2) est pourvu d'un dispositif de décharge (15) qui est pourvu d'une unité à piston-et-cylindre (16, 17, 19).

10. Dispositif selon la revendication 9,
caractérisé en ce que l'un des mandrins de serrage (2) peut être déplacé par sollicitation du piston (17) pour la sollicitation en traction axiale de la pièce serrée (3).

11. Dispositif selon l'une quelconque des revendications 5 à 10,
caractérisé en ce que l'un des mandrins de serrage (2) est un mandrin de serrage à trois mâchoires.

12. Dispositif selon l'une quelconque des revendications 5 à 10,
caractérisé en ce que l'un des mandrins de serrage (22) est un mandrin avec pince de serrage.
